(19) Europäisches Patentamt
European Patent Office
Office européen des brevets

(11) Publication number: **0 324 980 B1**

(12) # EUROPEAN PATENT SPECIFICATION

(45) Date of publication of patent specification: **29.03.95**

(51) Int. Cl.[6]: **C08G 61/08**

(21) Application number: **88121766.5**

(22) Date of filing: **28.12.88**

The file contains technical information submitted after the application was filed and not included in this specification

(54) **Norbornene formulations with longer pot lives and lower molding temperatures.**

(30) Priority: **31.12.87 US 140061**

(43) Date of publication of application:
**26.07.89 Bulletin 89/30**

(45) Publication of the grant of the patent:
**29.03.95 Bulletin 95/13**

(84) Designated Contracting States:
**AT BE CH DE ES FR GB GR IT LI LU NL SE**

(56) References cited:
**EP-A- 0 107 081**
**EP-A- 0 266 587**
**FR-A- 2 124 618**
**US-A- 4 426 502**

(73) Proprietor: **THE B.F. GOODRICH COMPANY**
**3925 Embassy Parkway**
**Akron**
**Ohio 44313-1799 (US)**

(72) Inventor: **Janda, Dennis Joseph**
**3117 Coventry Drive**
**Parma, Ohio 44134 (US)**

(74) Representative: **von Kreisler, Alek, Dipl.-Chem. et al**
**Patentanwälte**
**von Kreisler-Selting-Werner**
**Postfach 10 22 41**
**D-50462 Köln (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 324 980 B1

## Description

### BACKGROUND OF THE INVENTION

Polymers of cyclic olefins that contain the norbornene moiety can be made by ring-opening polymerization of the cyclic olefins in the presence of a metathesis catalyst comprising at least one alkylaluminum halide or trialkylaluminum cocatalyst and at least one tungsten or molybdenum compound catalyst.

Bulk polymerisation is defined as polymerization in the absence of a solvent or diluent. Early attempts of bulk polymerisation reactions were too rapid and therefore, uncontrollable. Furthermore, the known initial bulk polymerization attempts resulted in materials that were very dark, had poor physical properties, and poor appearance.

Further developments in the bulk polymerization of cycloolefins led to another approach which, likewise, was unsuccessful. This approach was characterized by splitting the monomer charge into two equal portions, one containing the catalyst and the other containing the cocatalyst. The object was to mix the two portions of the monomer charge at room temperature and then transfer the mix to a heated mold where polymerization and hardening would occur very quickly. It was discovered that instantaneous reaction took place upon contact of the two portions whereby a polymer barrier was formed between the two portions of the monomer charge, encapsulating some of the monomer from each portion. This was an indication of uncontrollable polymerization which prevented mixing.

A further development set forth in US-A-4,426,502 relates to ring opening polymerization in bulk of at least one monomer containing the norbornene group or a mixture of such monomers using a ring opening metathesis catalyst system wherein the cocatalyst is transformed to an alkoxy alkylaluminum or aryloxyalkylaluminum halide by reaction with at least one alcohol or active hydroxyl-containing compound prior to subsequent contact and reaction with at least one tungsten or molybdenum compound catalyst. The cyclic olefins are formed into hard objects in a single step by means of a reaction injection molding (RIM) process. Examples of such objects are business machine housings, furniture, window frames, and the like.

The gel times or pot lives of reaction injection molding formulations of norbornene functional monomers are relatively short. The short pot lives present problems when reactive molding processes other than RIM, such as resin transfer molding (RIM), are used. When work interruptions take place during molding operations, expensive, time consuming solvent flushing of a reactive mix from the mixing chamber is required following work interruptions longer than the pot life of the reactive mix.

### SUMMARY OF THE INVENTION

Prolonged pot life over the prior art and lower molding temperature can be attained when polymerizing a norbornene-type monomer in the presence of a metathesis catalyst system wherein the cocatalyst is prepared by reacting an alkylaluminum or alkylaluminum halide with a combination of alcohols comprising a tertiary alcohol or a hindered secondary alcohol, or a hindered primary alcohol with an unhindered primary alcohol or an unhindered secondary alcohol. The molding temperature is reduced by 10 to 80 °C which makes it possible to use plastic rather than metal molds.

### DETAILED DESCRIPTION OF THE INVENTION

The invention herein is directed to cocatalyst compositions comprising at least one norbornene-type monomer; and a metathesis ring opening cocatalyst selected from alkoxyalkylaluminum, aralkoxyalkylaluminum, alkoxyalkylaluminum halides, aralkoxyalkylaluminum halides, and mixtures thereof, wherein said alkoxy and said aralkoxy groups are derived from a combination of a first alcohol and a second alcohol wherein said first alcohol is selected from tertiary alcohols, hindered primary alcohols, hindered secondary alcohols, and mixtures thereof, and said second alcohol is selected from unhindered primary alcohols, unhindered secondary alcohols, and mixtures thereof, wherein molar ratio of said first alcohol to said second alcohol is in the range of 1:10 to 10:1 wherein said hindered primary alcohols contain 5 to 32 carbon atoms, wherein said hindered secondary alcohols contain 7 to 32 carbon atoms, wherein said hindered primary alcohols contain the following group I in their structures:

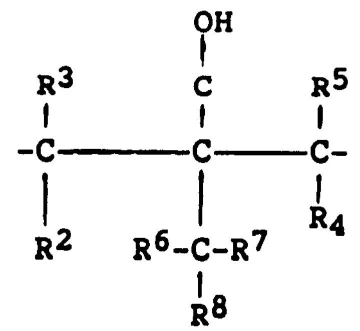

(I)

wherein in group I, $R^2$, $R^3$, $R^4$, $R^5$, $R^6$, $R^7$ and $R^8$ are individually selected from hydrogen, alkyl, alkenyl, alkinyl, cycloaliphatic and aryl groups of up to 12 carbon atoms; said unhindered primary alcohols contain up to 32 carbon atoms; said hindered secondary alcohols contain the following group II in their structures:

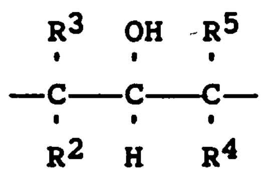

(II)

where in group II, above, $R^3$ and $R^5$ are individually selected from hydrogen, alkyl, alkenyl, alkinyl, cycloaliphatic and aryl groups each containing up to 12 carbon atoms, and $R^2$ and $R^4$ are individually selected from alkyl, alkenyl, alkinyl, cycloaliphatic, and aryl groups each containing up to 12 carbon atoms, and wherein said unhindered primary alcohols and said unhindered secondary alcohols are devoid of groups I and II.

The invention further relates to molding processes whereby longer pot lives of the combined monomer streams containing the ring opening metathesis catalyst system are realized as well as lower temperatures at which these molding mixtures are polymerized. The process is accomplished by combining a plurality of streams in a mold where polymerization is accomplished. One stream contains at least one norbornene-type monomer, a halometal activator required if the cocatalyst devoid of a halide is used, but optional otherwise, and a ring opening metathesis cocatalyst formed by reaction of an alcohol combination with an alkylaluminum halide. Optionally, the halometal can be in a separate stream. The combination of alcohols used in the formation of the cocatalyst comprises a first branched alcohol selected from tertiary alcohols, hindered secondary alcohols, hindered primary alcohols, and mixtures thereof, and a second alcohol selected from unhindered primary alcohols, unhindered secondary alcohols, and mixtures thereof, in the mole ratio of 1:10 to 10:1, preferably 1:5 to 5:1, and more preferably 1:2 to 4:1 of said first alcohol to said second alcohol. Monomer compositions containing the catalyst system described herein have longer pot lives and lower molding temperatures.

The term reaction mix, as used herein, refers to a mixture of at least one norbornene-type monomer or cycloolefin and the catalyst system described herein. The catalyst system includes a cocatalyst and a catalyst. The catalyst system includes a halometal activator when arylaluminums, alkylaluminums or cocatalyst components devoid of a halide are used in the formation of the cocatalyst. The halometal activator is optional when alkylaluminum halides are used. The reaction mix also contains other conventional additives.

Pot life, as used herein, refers to the time during which polymerization of the reaction mix at ambient conditions remains essentially dormant. Stated differently, pot life is the time interval between mixing of the ingredients to form the reaction mix and commencement of monomer polymerisation at ambient conditions. Pot life depends on many variables such as the amount and type of ingredients, the temperature at which the reaction mix is held, impurities present in the system, ratio of catalyst to cocatalyst, etc. Pot life also depends on the reducing power of the cocatalyst; the higher the reducing power, the shorter the pot life.

Impingement mixing apparatus can be used to mix the ingredients herein. The reaction injection molding industry uses the impingement mixing apparatus nearly exclusively due to the short pot lives of most available RIM chemical systems. With an impingement mixing apparatus, as applied to the system herein, the two monomer portions, i.e., one containing the catalyst and the other the cocatalyst, can be

nearly instantaneously mixed and injected into the mold. The primary benefit of this invention, namely longer pot lives and lower molding temperatures, is realized in reactive molding processes other than RIM, RTM and casting (pour molding) being two of these. However, RIM also benefits from this invention when mats or preforms of reinforcing fiber are placed in the mold cavity, necessitating a slow mold fill rate and requiring non-reaction of the reaction mix during the longer than usual mold fill time.

When emergencies and work interruptions take place during molding operations, it is desirable for many reactive processes to have a pot life much longer than it takes to merely mix the ingredients. For instance, during RTM process interruptions of one-half to one hour, the reaction mix should remain essentially unreacted or unpolymerized, otherwise, expensive time consuming solvent flushing of reaction mix from the mixing chamber would be required following such work interruptions. For these and other reasons, a short pot life is a disadvantage due to the fact that not enough time is given to work with the reaction mix since polymerization sets in too quickly.

Based on the considerations discussed above, the system herein is designed to give a pot life in excess of about one-half hour, preferably in excess of two hours, and more preferably in excess of five hours, with mold temperatures of 10 to 80 °C lower, preferably 20 to 50 ° lower, when compared to cocatalysts formed from only tertiary alcohols, hindered secondary alcohols, or hindered primary alcohols.

The temperature of the mold for the system described herein should be in excess of 50 °C, more likely in the range of 50 ° to 100 °C. Polymerization time for reaction injection molding should generally be less than 5 minutes, preferably 5 seconds to 2 minutes, although this time depends on many variables, including the thickness of the resulting molding. For other forms of bulk polymerization, different polymerization periods can be designed with a concomitant effect on pot life.

It has been discovered that by lowering the reducing power of the cocatalyst, adequate pot life and lower molding temperature can be provided. Lowered reducing power of the cocatalyst is achieved by reacting an alcohol combination with an alkylaluminum or alkylaluminum halide to produce an alkoxyalkylaluminum, aralkoxyalkylaluminum, alkoxyalkylaluminum halide or an aralkoxyalkylaluminum halide cocatalyst which is soluble in the norbornene-type monomer. The combination of alcohols used to form the cocatalyst comprises at least one tertiary alcohol or hindered primary alcohol or hindered secondary alcohol and at least one unhindered primary alcohol or unhindered secondary alcohol in the preferred respective molar ratio of 4:1 to 1:2. One or more unhindered primary alcohols can be used with one or more of the unhindered secondary alcohols together with one or more of the tertiary alcohols or one or more of the hindered secondary alcohols or one or more of the hindered primary alcohols. The combination of alcohols used to form the cocatalyst must include at least one tertiary alcohol or one hindered secondary alcohol or one hindered primary alcohol and at least one unhindered primary alcohol or one unhindered secondary alcohol to impart longer pot life and lower polymerization temperature to a reaction mix containing the cocatalyst prepared in the manner described.

To describe this in another fashion, the alcohol combination includes a first alcohol and a second alcohol. The first alcohol is selected from the branched alcohols or a mixture of such alcohols in column A, below, and the second alcohol is selected from the alcohols or a mixture of the alcohols in column B, below:

| Column A | Column B |
|---|---|
| tertiary alcohols<br>hindered secondary alcohols (7-31Cs)<br>hindered primary alcohols (8-32Cs) | unhindered primary alcohols<br>unhindered secondary alcohols |

A tertiary alcohol is one wherein the carbon carrying the hydroxyl group is devoid of hydrogen atoms, i.e., where the carbon atom is bonded to the hydroxyl group and other carbon atoms. Tertiary alcohols suitable herein include saturated and unsaturated tertiary alcohols that contain 4 to 34, preferably 4 to 19 carbon atoms. Suitable tertiary alcohols which are devoid of rings, i.e., acyclic tertiary alcohols, contain 4 to 19, preferably 4 to 13 carbon atoms whereas suitable tertiary alcohols that contain at least one cyclic structure, have 9 to 34, preferably 9 to 24 carbon atoms. Specific examples of suitable tertiary alcohols include t-butanol, t-amyl alcohol, 3-ethyl-3-pentanol, 3-methyl-3-pentanol, 2-methyl-2-hexanol, triphenyl methanol, 2-ethy1-2-hexanol, 2-propyl-2-hexanol, 3-methyl-3-hexanol, 3-ethyl-3-hexanol, 3-propyl-3-hexanol, 1-phenyl, 1-methyl-1-ethanol, and 1-phenyl, 1-ethyl-1-propanol.

Primary alcohols contain two hydrogen atoms bonded to the carbon atom which carries the hydroxyl group. Primary alcohols suitable herein include saturated and unsaturated alcohols which can be totally acyclic or which can contain cyclic groups, including phenyl groups. Hindered primary alcohols suitable

herein contain 5 to 32 preferably 5 to 18 carbon atoms. The acyclic primary alcohols are preferred. Suitable hindered primary alcohols herein contain the following group I in their structures:

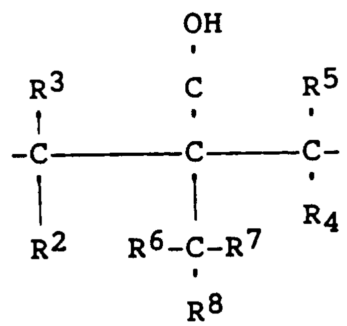

(I)

In the above Group I, $R^2$, $R^3$, $R^4$, $R^5$, $R^6$, $R^7$ and $R^8$ are individually selected from hydrogen, alkyl, alkenyl, alkinyl, cycloaliphatic, and aryl groups of up to 12, preferably up to 6 carbon atoms. In a preferred group I embodiment, $R^2$, $R^3$, $R^4$, $R^5$, $R^6$, $R^7$ and $R^8$ are individually selected from hydrogen and alkyl groups of 1 to 6 carbon atoms. Specific examples of hindered primary alcohols suitable herein include neopentyl alcohol, 2,2-dimethyl-1-butanol, 2,2-diethyl-1-butanol, 2-methyl, 2-ethyl-1-propanol, 2-methyl, 2-ethyl-1-butanol, 2,2-dipropyl-1-pentanol, 2,2-dipropyl-1-hexanol and 2-propyl, 2-ethyl-1-hexanol. All other primary alcohols are unhindered, examples of which include ethanol, propyl alcohols, butyl alcohols, heptyl alcohols, dodecyl or lauryl alcohol, hexadecyl or cetyl alcohol, and allyl alcohol. Suitable unhindered primary alcohols contain up to 32, preferably 2 to 18 carbon atoms.

The hindered secondary alcohols suitable herein contain 7 to 32, preferably 7 to 12 carbon atoms and are characterized by the presence of the following group II in their structures:

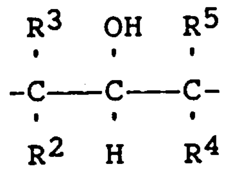

(II)

In the above group II, $R^3$ and $R^5$ are individually selected from hydrogen, alkyl, alkenyl, alkinyl, cycloaliphatic and aryl groups of up to 12 carbon atoms and $R^2$ and $R^4$ are individually selected from alkyl, alkenyl, alkinyl, cycloaliphatic and aryl groups of up to 12 carbon atoms. In a preferred group II embodiment, $R^3$ and $R^5$ are individually selected from hydrogen and alkyl groups of 1 to 6 carbon atoms and $R^2$ and $R^4$ are individually selected from alkyl groups of 1 to 6 carbon atoms. Specific examples of hindered secondary alcohols suitable herein include 2,4-dimethyl-3-pentanol, 3,5-dimethyl-4-heptanol, 2,4-diethyl-3-hexanol, 2,4-dimethyl-3-hexanol, 2-methyl, 4-ethy1-3-hexanol and 2-methyl, 4-ethyl-3-heptanol. Specific examples of unhindered secondary alcohols suitable herein include 3-pentanol, 3-heptanol, sec-butanol, benzyl alcohol, 5-methyl-2-hexanol, and the like. Suitable unhindered secondary alcohols are devoid of group II structure and contain 3 to 22, preferably 3 to 12, carbon atoms.

The alcohol combinations defined above and suitable herein are soluble in norbornene-containing monomers or cycloolefins that are polymerized to polymers by ring opening polymerization. Although one molar quantity of triphenyl methanol did not dissolve in dicyclopentadiene (DCPD) even after it was heated to about 60 °C, a 0.1 molar solution of triphenyl methanol and dissolve in DCPD when heated to about 60 °C.

Unhindered primary alcohols and unhindered secondary alcohols which do not have the structure set forth above, when not used in the manner described herein do not result in longer pot lives and lower molding temperatures. For instance, isopropyl alcohol alone, when reacted with diethylaluminum chloride (DEAC) to form the cocatalyst which was used to polymerize methyltetracyclododecene (MTD) at an ROH/DEAC mole ratio of 1.2, 1.4 and 1.4 at respective mold temperatures of 110 °C, 110 °C and 75 °C in the presence of 1.5 mls of 0.5 molar silicon tetrachloride activator, yielded respective pot lives of 2, 7-1/2 and 6 minutes with conversations exceeding 93%. With 2-methyl-1-propanol and 2-ethyl-1-butanol in absence of a chlorosilane or any other activator, when used at ROH/Al of 1.2 each, and at mold temperature

of 110 °C, the respective pot lives were 4 and 15 minutes with conversions of 90%. With 1-heptanol, in presence of 4.0 mls of 0.25 molar silicon tetrachloride activator at respective ROH/Al ratios of 0.5 and 1.0, the pot lives were 5 seconds and 80 seconds. With t-butanol and 2,4-dimethyl-3-pentanol in respective ROH/Al molar ratios of 0.35 and 0.45 for a combined ROH/Al ratio of 0.8, using 100 grams of a 90/10 weight ratio dicyclopentadiene/ethylidene norbornene (DCPD/ENB) monomer mixture at a mold temperature of 75 °C, the pot life or minutes to thickening was 180 minutes.

The alcohol combinations can be prereacted with the alkylaluminums or alkylaluminum halides to form a more concentrated cocatalyst solution before adding it to the system or these components can be added to the full monomer quantity necessary to make up the formulation component whereby the cocatalyst is formed in situ. In making of the cocatalyst, the ingredients thereof are initially individually diluted in a norbornene-type monomer. Then, they can be combined in a number of different ways, however, it is preferred to first combine the alkylaluminum or alkylaluminum halide with the first alcohol selected from tertiary alcohols, hindered primary alcohols and hindered secondary alcohols, and then add the unhindered primary alcohol or unhindered secondary alcohol, or a mixture thereof. Such reactions are conducted in absence of water, by providing a blanket of nitrogen and mixing the ingredients. The reactions are rapid and result in evolution of volatile hydrocarbons, such as ethane if diethylaluminum chloride is the cocatalyst component. The reactions go essentially to 100% completion.

The alkoxy or aralkoxy group in the cocatalyst functions to inhibit the reducing power of the cocatalyst by replacing some of the alkyl groups on the aluminum thus making it possible to mix and subsequently react the cyclic olefins via bulk polymerization. It should be understood that a stoichiometric excess of alcohol or a hydroxyl-containing material must be avoided. Stoichiometric excess herein is defined as twice the number of moles of the alcohol combination or hydroxyl-containing material in excess of the molar amount of the alkylaluminum moiety, which renders the aluminum compound ineffective as a reducing agent or cocatalyst. It is usually sufficient to employ approximately an equimolar ratio of these ingredients to obtain a long pot life and low molding temperature.

Preferred alkylaluminums and alkylaluminum halides that can be reacted with the alcohol combinations described herein include monoalkylaluminum dihalides, $R^1AlX_2$, dialkylaluminum monohalides, $R^1_2$ AlX, alkylaluminum sesquihalides, $R'_3Al_2X_3$, trialkyl aluminum, $R^1_3$ Al, and mixtures thereof. In these formulas, $R^1$ is an alkyl radical containing 1 to 12 carbon atoms, preferably 1 to 8 carbon atoms, and X is a halogen selected from chlorine, iodine, bromine and fluorine. Specific examples of such alkylaluminums and alkylaluminum halides include ethylaluminum dichloride, diethylaluminum monochloride, ethylaluminum sesquichloride, diethylaluminum iodide, ethylaluminum diiodide, propylaluminum dichloride, propylaluminum diiodide, isobutylaluminum dichloride, ethylaluminum dibromide, methylaluminum sesquichloride, methylaluminum sesquibromide, trioctylaluminum, triethylaluminum, and triisobutylaluminum.

The cocatalyst obtained has the formula

$(RO)_aR^1_b\ AlX_c$

wherein R is selected from a combination of one or more of said first alcohols and one or more of said second alcohols containing 4 to 34 carbon atoms; $R^1$ is an alkyl radical containing 1 to 12 carbon atoms, preferably 2 to 8, as defined above, X is a halogen selected from chloride, iodine, bromine and fluorine, preferably chlorine; and Al represents aluminum. In the halide-containing cocatalyst, "a" is the number of equivalents of the alkoxy or aralkoxy moiety (RO-) and can vary from a minimum of 1/2 to a maximum of 2-1/2, preferably from 0.75 to 1-1/2; "b" is the number of equivalents of the alkyl group ($R^1$) and can vary from a minimum of 1/4 to a maximum of about 2, preferably from 1/2 to 1-1/2; and "c" is the number of equivalents of halogen X and can vary from a minimum of 1/2 to a maximum of 2, preferably from 3/4 to 1-1/4. In cocatalysts devoid of a halogen, "a" is 0.7 to 1.5, preferably 0.75 to 1.25; "b" is 1.5 to 2.3, preferably 1.75 to 2.25; and "c" is zero. Such cocatalysts devoid of a halide require the presesce of an activator. The sum of "a", "b" and "c" must equal 3.

The molar ratio of aluminum in the cocatalyst to molybdenum or tungsten in the catalyst is in the range of 200:1 to 1:10, preferably 10:1 to 2:1. About 0.1 to 10 millimoles of molybdenum or tungsten catalyst is used per mole of monomer that is polymerized by ring opening, in a preferred embodiment. On the monomer basis, molar ratio of aluminum to monomer is 0.01 to 2,000, preferably 0.2 to 100 millimoles of aluminum per mole of monomer.

The presence of a halide, such as a chloride, in the system is imperative. If the cocatalyst does not contain any halide, then an activator is used to supply halide to the system. Suitable activators are selected generally from halometal compounds and more specifically from halosilanes of the formula

$R_mSiX_n$

where m is 0-3, n is 1-4, R is individually selected from hydrogen, alkyl and alkoxy groups containing 1 to 6 carbon atoms, and X is selected from chlorine, fluorine, bromine, and iodine, particularly chlorine. Specific examples of preferred activators are chlorosilanes such as dimethylmonochlorosilane, dimethyldichlorosilane, diphenyldichlorosilane, tetrachlorosilane, and the like. Amount of the activator that is used is in the range of 0.05 to 10 millimoles per mole of the norbornene-containing monomer, preferably 0.1 to 2 millimoles per mole of monomer.

Preferred molybdenum and tungsten compound catalysts are organoammonium molybdates and organoaluminum tungstates that are selected from those defined as follows:

$[R_4N]_{(2y-6x)}M_xO_y$ $[R^1_3NH]_{2y-6x)}M_xO_y$

where O represents oxygen; M represents either molybdenum or tungsten; x and y represent the number of M and O atoms in the molecule based on the valence of +6 for molybdenum, +6 for tungsten, and -2 for oxygen; and the R and $R^1$ radicals can be the same or different and are selected from hydrogen, alkyl, and alkylene groups each containing from 1 to 20 carbon atoms, and cycloaliphatic groups each containing from 5 to 16 carbon atoms. All of the R and $R^1$ radicals cannot be hydrogens nor be small in the number of carbon atoms since such a condition will render the molecule essentially insoluble in hydrocarbons and most organic solvents. In a preferred embodiment, the R radicals are selected from alkyl groups each containing 1 to 18 carbon atoms wherein the sum of carbon atoms on all the R radicals is from 20 to 72, more preferably from 25 to 48. In a preferred embodiment, the $R^1$ radicals are selected from alkyl groups each containing from 1 to 18 carbon atoms wherein the sum of carbon atoms on all of the $R^1$ radicals is from 15 to 54, more preferably from 21 to 42.

Specific examples of suitable organoammonium molybdates and organoammonium tungstates described herein include tridodecylammonium molybdates and tungstates, methyltricaprylammonium molybdates and tungstates, tri(tridecyl)ammonium molybdates and tungstates, and trioctylammonium molybdates and tungstates.

The organoammonium molybdate or organoammonium tungstate catalyst, or a mixture thereof, is employed at a level of 0.01 to 50 millimoles molybdenum or tungsten per mole of total monomer, preferably 0.1 to 10 millimoles per mole of total monomer. The molar ratio of the alkylaluminum halide to the organoammonium molybdate and/or organoammonium tungstate is not critical and can be in the range of 200:1 or more to 1:10, preferably from 10:1 to 2:1 of aluminum to molybdenum or tungsten.

The norbornene-type or cycloolefin monomers that can be polymerised in bulk, in accordance with the process described herein, are characterized by the presence of at least one of the following norbornene groups, identified by formulas I and II.

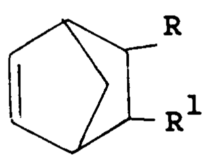

(I)

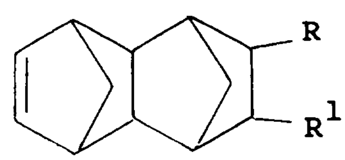

(II)

where R and $R^1$ are independently selected from hydrogen, alkyl, and aryl groups of up to 20 carbon atoms, and saturated and unsaturated cyclic groups containing 3 to 12 carbon atoms formed by R and $R^1$ together with the two ring carbon atoms connected thereto. In a preferred embodiment, R and $R^1$ are independently selected from hydrogen and alkyl groups of 1 to 2 carbon atoms.

Examples of cycloolefin monomers referred to herein include norbornene, dicylcopentadiene, ethylidene norbornene, dihydrodicyclopentadiene, trimers of cyclopentadiene, tetramers of cyclopentadiene, tetracyclododecene, methyltetracyclododecene, 2-norbornene and other norbornene monomers such as 5-methyl-2-norbornene, 5,6-dimethyl-2-norbornene, 5-ethyl-2-norbornene, 5-butyl-2-norbornene, 5-hexyl-2-norbornene, 5-octyl-2-norbornene, and 5-dodecyl-2-norbornene.

This invention especially contemplates preparation of homopolymers, copolymers and terpolymers of methylnorbornene, ethylidene norbornene, trimers and tetramers of cyclopentadiene, methyltetracyclododecene and dicyclopentadiene and especially homopolymers of dicylcopentadiene, methyltetracyclododecene and methylnorbornene. The copolymers of methyltetracyclododecene and methylnorbornene are polymerized from monomer mixtures containing from 1 to 75% by weight of methylnorbornene. The terpolymers are polymerized from monomer mixtures containing 1 to 75% by weight methylnorbornene and 25 to 99% by weight methyltetracyclododecene, with the remainder being dicyclopentadiene. The copolymers of dicyclopentadiene and ethylidene norbornene are polymerized from monomer mixtures containing from 1 to 75 weight percent ethylidene norbornene. The copolymers and terpolymers of dicyclopentadiene and trimer(s) of cyclopentadiene are polymerized from monomer mixtures containing 25 to 99% dicyclopentadiene.

Bulk polymerization of the system described herein is especially suitable for reactive molding processes such as resin transfer molding and reaction injection molding. Typically, in such a process, one half of a cycloolefin is added to one tank, together with a cocatalyst, and the other half is added to another tank along with a catalyst. Both the cocatalyst and the catalyst described herein are soluble in the cycloolefin monomers. Other additives can be admixed with the monomer in either or both tanks. Agitators are provided in the tanks to facilitate mixing of the formulation components and each tank is connected to a nitrogen source through respective lines so that each tank can be maintained under a blanket of nitrogen.

During molding operation, valves are manipulated to admit the formulation components from their respective tanks into a mix head where they are mixed at about room or ambient temperature and conveyed to a mold. In a thermally initiated system, the mold is maintained at a temperature in excess of about 40 °C, and preferably in the range of 50° to 100 °C.

Using a mold temperature of 75 °C, the mix after entering the mold rises in temperature from about 25 °C to about 75 °C and then to in excess of about 130 °C in the next 2 to 10 seconds. At this time, polymerisation is completed and the temperature begins to drop as the solid, molded object starts to cool. When sufficiently cooled, the mold is opened and the object is removed.

Generally speaking, once the reaction is initiated at mold temperature, it takes only 2 to 10 seconds for polymerization to take place. This, of course, depends on many variables such as the particular monomers and additives used, mold temperature, specific catalyst and cocatalyst system employed, etc. For purposes herein, the time in the mold should be less than about 5 minutes. This is the time measured from the commencement of the filling of the mold to the time when the monomers are in a polymerized state and the object is ready for removal from the mold.

Reaction injection molding (RIM), a form of bulk polymerization, is a low pressure one-step or one-shot injection of liquid components into a closed mold where rapid polymerization occurs resulting in a molded plastic product. RIM differs from thermoplastic injection molding in a number of important respects. Thermoplastic Injection molding is conducted at pressures of 68.94 MPa to 137.9 MPa (10,000 to 20,000 psi) in the mold cavity by melting a solid resin and conveying it into a mold maintained at a temperature below the Tg of the polymer, the molten resin temperature being 150° to 350 °C, and viscosity of the molten resin in the thermoplastic injection molding process being generally in the range of 50,000 to 1,000,000 mPa.s (cps), and typically 200,000 mPa.s (cps). In the thermoplastic injection molding process, solidification of the resin occurs in about 10 to 90 seconds, depending on the size of the molded product, following which, the molded product is removed from the mold. There is no chemical reaction taking place in a thermoplastic injection molding process when the resin is introduced into a mold.

In a RIM process, the viscosity of the materials fed to a mold is 50 to 3,000 mPa.s (cps), preferably 100 to 1500 mPa.s (cps), at injection temperatures varying from room temperature for urethanes to about 80 °C for lactams. Mold temperatures in a RIM process are in the range of about 50° to 150 °C and pressures in the mold are generally in the range of 206.8 kPa to 1034.2 kPa (30 to 150 psi). At least one component in the RIM formulation is a monomer that is polymerized to a polymer in the mold.

The main distinction between injection molding and RIM resides in the fact that in RIM, a chemical reaction takes place in the mold to transform a monomer to a polymeric state. For practical purposes, the chemical reaction must take place rapidly in 2 seconds to 2 minutes, in a preferred embodiment.

Described above are combinations of alcohols used in the formation of a metathesis cocatalyst comprising a first alcohol selected from tertiary alcohols, hindered primary alcohols, hindered secondary alcohols, and mixtures thereof with a second alcohol selected from unhindered primary alcohols, unhindered secondary alcohols, and mixtures thereof. Such cocatalysts can prolong pot life of a full metathesis catalyzed monomer mixture and they can reduce the molding temperature of such a monomer mixture. Such alcohol combinations, when used to lower the reducing power of an alkylaluminum or alkylaluminum halide, can prolong the pot life of a fully metathesis catalyzed monomer mixture from seconds to minutes and even hours. The pot lives which can be realized using the alcohol mixtures described herein are in excess of about one-half hour, and preferably in excess of 2 hours and more preferably in excess of 5

hours. The alcohol combinations described herein can lead to a reduction of mold temperature of 20 to 30 °C when compared to polymerizations carried out with cocatalysts prepared using tertiary alcohols, such as t-butanol. With the alcohol combinations described herein, polymerization of norbornene-type monomers can be carried out at 50 to 90 °C whereas mold temperatures on the order of 100 to 120 °C are used with cocatalysts prepared with tertiary alcohols. The same is true when comparing the cocatalysts of this invention with cocatalysts prepared from certain hindered primary alcohols and hindered secondary alcohols when used alone and not in combination with other alcohols.

Mold temperature is important for more than one reason. It is generally desirable to carry out a polymerization reaction at as low a mold temperature as possible in order to better control the reaction, to save energy costs, facilitate part demolding and other reasons. If temperatures exceeding about 90 °C are used to carry out a reaction, metal molds are used. If temperatures below about 80 °C are used to carry out a reaction, plastic molds can be used. Needless to say, metal molds are much more expensive than plastic molds and it is also for this reason that temperatures below about 80 °C are preferred so that the reaction can be carried out in a plastic mold.

Example 1

This example demonstrates the use of combinations of at least one tertiary or hindered primary or hindered secondary alcohol which alcohol alone has the capacity to extend pot life of a molding monomer mixture together with at least one unhindered primary or unhindered secondary alcohol which alone does not have the capacity to extend pot life. Such alcohol combinations have the capacity to extend pot life and also to reduce mold temperature by 10 to 80 °C, but more realistically 30 to 60 °C.

The experiments were carried out by first combining all of the recipe ingredients in a glass pop bottle, inserting a valved pouring spout rigged to pressurize the bottle to approximately 111.8-118.7 kPa (2-3 psig), inserting the pouring spout in the mold inlet, and opening the valve on the pouring spout thus filling the mold. Only half the mixture in the bottle was poured out into the mold. The other half remained in the bottle and was used to measure the pot life of the material at room temperature. Pot life was recorded as the point when the first noticeable increase in viscosity occurred in the mixture in the bottle. During preparation of the recipe in the bottle, the ingredients were added in the following order: First, the impact modifier was added to the monomer mixture in the bottle and allowed to dissolve. Next, the monomer diluted solution of the tertiary alcohol, hindered secondary alcohol, or hindered primary alcohol was added to the bottle, then the monomer diluted solution of DEAC, then the monomer diluted solution of n-propanol, then the monomer diluted solution of silicon tetrachloride activator, and finally, the monomer diluted solution of tridodecylammonium molybdate catalyst. After each addition, the ingredients in the bottle were well mixed. After the silicon tetrachloride was added, a vacuum was pulled on the bottle to remove dissolved gases.

Table I

| Exp. No. | Wt. Ratio Monomer | Monomer (grams) | 0.5MDEAC (mls) | 1.0M n-PrOH | 1.0M Alcohol Name | 1.0M Alcohol (mls) | ROH/Al | 0.1N Mo (mls) | 0.25M $SiCl_4$ (mls) | Impact Mod.(g) | Mold T.(°C) | Pot Life (min.) | Max. T. (°C) | % Conv. |
|---|---|---|---|---|---|---|---|---|---|---|---|---|---|---|
| 1. | 90/10 DCPD/ENB | 82.8 | 4.0 | 0.6 | t-BA | 1.0 | 0.8 | 5.0 | 4.0 | 2.5 | 75 | 300 | 165 | 98.8 |
| 2. | 90/10 DCPD/ENB | 82.8 | 4.0 | 1.0 | t-BA | 1.0 | 1.0 | 5.0 | 4.0 | 2.5 | 75 | 300 | 119 | 97.4 |
| 3. | 90/10 DCPD/ENB | 82.8 | 4.0 | 0.3 | t-BA | 1.0 | 0.8 | 5.0 | 4.0 | 2.5 | 75 | 180 | 151 | 98.0 |
| 4. | 90/10 DCPD/ENB | 82.8 | 4.0 | 0.7 | t-BA | 1.3 | 1.0 | 1.0 | 4.0 | 2.5 | 75 | 450 | 112 | 97.6 |
| 5. | 90/10 DCPD/ENB | 82.8 | 4.0 | 0.9 | t-BA | 0.7 | 0.8 | 5.0 | 4.0 | 2.5 | 75 | 200 | 161 | 98.9 |
| 6. | 90/10 DCPD/ENB | 82.8 | 4.0 | 0.5 | t-BA | 0.7 | 0.6 | 5.0 | 4.0 | 2.5 | 75 | 25 | 190 | 99.2 |
| 7. | 90/10 DCPD/ENB | 82.9 | 4.0 | 0.3 | DMA | 1.3 | 0.8 | 5.0 | 4.0 | 2.5 | 75 | 40 | 138 | 97.6 |
| 8. | 90/10 DCPD/ENB | 84.0 | 4.0 | 0.9 | DMA | 0.7 | 0.8 | 5.0 | 4.0 | 2.5 | 75 | 45 | 172 | 96.9 |
| 9. | 90/10 DCPD/ENB | 84.7 | 4.0 | 0.3 | EPA | 1.3 | 0.8 | 5.0 | 4.0 | 2.5 | 75 | 55 | 165 | 97.7 |
| 10. | 90/10 DCPD/ENB | 83.6 | 4.0 | 0.9 | EPA | 0.7 | 0.8 | 5.0 | 4.0 | 2.5 | 75 | 23 | 145 | 97.7 |

In Table I, above, the following contractions appear:

| | |
|---|---|
| DMA - | 2,4-dimethyl-3-pentanol |
| EPA - | 3-ethyl-3-pentanol |
| $SiCl_4$ - | tetrachloro silane |
| Impact Mod. - | Diene 55 or Kraton® D-1102 (Diene 55 is a polybutadiene polymer; Kraton® D-1102 is a styrenebutadiene-styrene block copolymer) |

MTD - methyltetracyclododecene
ENB - ethylidene norbornene
DEAC - diethylaluminum chloride
n-PrOH - normal propyl alcohol
t-BA - tertiary butyl alcohol
Max. T - maximum temperature achieved during polymerization in the mold

The results in Table I, above, demonstrate that the alcohol mixtures are effective in extending pot life of a monomer formulation and in lowering mold temperature. Pot lives greater than about one half hour can be achieved as well as mold temperatures which are 10 to 80 °C lower than otherwise could practically be used if only a tertiary alcohol or hindered primary alcohol or hindered secondary alcohol were used in the formation of the cocatalyst.

## Claims

1. Cocatalyst composition comprising at least one norbornene-type monomer; and a metathesis ring opening cocatalyst selected from alkoxyalkylaluminum, aralkoxyalkylaluminum, alkoxyalkylaluminum halides, aralkoxyalkylaluminum halides, and mixtures thereof, wherein said alkoxy and said aralkoxy groups are derived from a combination of a first alcohol and a second alcohol wherein said first alcohol is selected from tertiary alcohols, hindered primary alcohols, hindered secondary alcohols, and mixtures thereof, and said second alcohol is selected from unhindered primary alcohols, unhindered secondary alcohols, and mixtures thereof, wherein molar ratio of said first alcohol to said second alcohol is in the range of 1:10 to 10:1 wherein said hindered primary alcohols contain 5 to 32 carbon atoms, wherein said hindered secondary alcohols contain 7 to 32 carbon atoms, wherein said hindered primary alcohols contain the following group I in their structures:

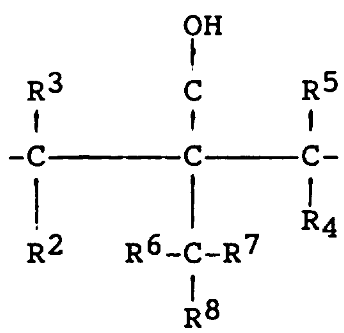

(I)

wherein in group I, $R^2$, $R^3$, $R^4$, $R^5$, $R^6$, $R^7$ and $R^8$ are individually selected from hydrogen, alkyl, alkenyl, alkinyl, cycloaliphatic and aryl groups of up to 12 carbon atoms; said unhindered primary alcohols contain up to 32 carbon atoms; said hindered secondary alcohols contain the following group II in their structures:

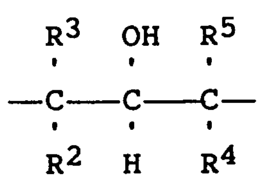

(II)

where in group II, above, $R^3$ and $R^5$ are individually selected from hydrogen, alkyl, alkenyl, alkinyl, cycloaliphatic and aryl groups each containing up to 12 carbon atoms, and $R^2$ and $R^4$ are individually selected from alkyl, alkenyl, alkinyl, cycloaliphatic, and aryl groups each containing up to 12 carbon atoms, and wherein said unhindered primary alcohols and said unhindered secondary alcohols are devoid of groups I and II.

2. Composition of claim 1 wherein said tertiary alcohols are selected from acyclic tertiary alcohols containing 4 to 19 carbon atoms.

3. Composition of claim 2 wherein in said hindered primary alcohols, $R^2$ to $R^8$ groups are individually selected from hydrogen and alkyl groups of 1 to 6 carbon atoms; wherein in said hindered secondary alcohols, $R^2$ and $R^4$ groups are individually selected from alkyl groups of 1 to 6 carbon atoms and $R^3$ and $R^5$ groups are individually selected from hydrogen and alkyl groups of 1 to 6 carbons; and wherein said molar ratio of said first alcohol to said second is 1:5 to 5:1.

4. Composition of claim 3 wherein said norbornene-type monomer is selected from substituted and unsubstituted 2-norbornenes, dicyclopentadienes, dihydrodicyclopentadienes, trimers and tetramers of cyclopentadienes, tetracyclododecenes, and mixtures thereof; and wherein said cocatalyst has the following formula:

$(RO)_aR^1_b\,AlX_c$

where RO is derived from said combination of said first alcohol and said second alcohol, where in said halide-containing cocatalysts, "a" is 1/2 to 2-1/2, "b" is 1/4 to 2, "c" is 1/2 to 2, and in the cocatalysts which are devoid of a halogen, "a" is 0.7 to 1.5, "b" is 1.5 to 2.3, and "c" is zero, with the sum of a, b and c being 3.0, $R^1$ is selected from alkyl radicals of 1 to 12 carbon atoms, and X is selected from chlorine, iodine, bromine and fluorine.

5. Composition of claims 1 to 4 further containing an activator selected from halosilanes defined as follows:

$R_mSiX_n$

where m is 0 to 3, n is 1 to 4, R is individually selected from alkyl and alkoxy groups containing 1 to 6 carbon atoms, and X is selected from chlorine, bromine, fluorine, and iodine.

6. Composition of claim 5 having pot life exceeding two hours and a mold temperature of 50 to 100°C; where in said cocatalyst, $R^1$ contains 2 to 8 carbon atoms; where in the halide-containing cocatalysts, "a" is 0.75 to 1-1/2, "b" is 1/2 to 1-1/2, "c" is 3/4 to 1-1/4; where in the cocatalysts devoid of a halide, "a" is 0.75 to 1.25, "b" is 1.75 to 2.25, and "c" is zero; and X is chlorine; wherein 0.2 to 100 millimoles of aluminum in said cocatalyst is used per mole of said monomer; and wherein 0.05 to 10 millimoles of said activator is used per mole of said monomer.

7. Composition of claim 6 wherein said first alcohol is selected from t-butanol, t-amyl alcohol, 3-ethyl-3-pentanol, triphenyl methanol 2,4-dimethyl-3-pentanol, 3-methyl-3-pentanol, 2-methyl-2-hexanol, neopentyl alcohol, 2,4-diethyl-3-hexanol, 2,4-dimethyl-3-hexanol, 2-methyl-4-ethyl-3-hexanol, 2,2-dimethyl-1-butanol, 2,2-diethyl-1-butanol, 2-methyl-2-ethyl-1-propanol, 2-methyl-2-ethyl-1-butanol, 2,2-dipropyl-1-pentanol, 2,2-dipropyl-1-hexanol, 2-propyl-2-ethyl-1-hexanol; 2-ethyl-2-hexanol, 2-propyl-2-hexanol, 3-methyl-3-hexanol, 3-ethyl-3-hexanol, 3-propyl-3-hexanol, 1-phenyl-1-methyl-1-ethanol, and 1-phenyl-1-ethyl-1-propanol, and mixtures thereof; wherein said second alcohol is selected from ethanol, methanol, n-propyl alcohol, n-butanol, isobutyl alcohol, 1-heptanol, 1-pentanol, 1-hexanol, 1-octanol, isopropanol, sec-butanol, 2-pentanol, 3-hexanol, and mixtures thereof; wherein said norbornene-type monomer is selected from methyl norbornene, ethylidene norbornene, trimers and tetramers of cyclopentadiene, dicyclopentadiene, methyltetracyclododecene, and mixtures of such monomers; wherein said activator is selected from tetrachlorosilane, dimethylmonochlorosilane, dimethyldichlorosilane, diphenyldichlorosilane, and mixtures thereof; and wherein said cocatalyst is formed from components selected from monoalkylaluminum dichlorides, dialkylaluminum monochlorides, alkylaluminum sesquichlorides, trialkylaluminums, and mixtures thereof, wherein each alkyl group contains 2 to 8 carbon atoms.

8. The composition of claim 7 wherein said first alcohol is 2,4-dimethyl-3-pentanol and said second alcohol is n-propyl alcohol.

9. A process for polymerizing a monomer charge containing at least one norbornene-type monomer to polymer comprising combining a plurality of reactant streams, one reactant stream containing at least one norbornene-type monomer, an activator selected from halometal compounds which are required in conjunction with the use of cocatalysts devoid of a halide but which are optional with halide-containing cocatalysts, and a metathesis ring opening cocatalyst selected from alkoxyalkylaluminum halides,

aralkoxyalkylaluminum halildes, alkoxyalkylaluminums, aralkoxyalkylaluminums, and mixtures thereof, wherein said alkoxy and said aralkoxy groups are derived from a combination of a first alcohol and a second alcohol wherein said first alcohol is selected from tertiary alcohols, hindered primary alcohols, hindered secondary alcohols, and mixtures thereof, and wherein said second alcohol is selected from unhindered primary alcohols, unhindered secondary alcohols, and mixtures thereof, molar ratio of said first alcohol to said second alcohol is in the range of about 1:10 to 10:1; and at least one other reactant stream containing at least one norbornene-type monomer and a metathesis ring opening catalyst; mixing and injecting said reactant streams into a mold where polymerization by ring opening of said monomer takes place; and extracting a molded product from the mold wherein said hindered secondary alcohols contain 3 to 18 carbon atoms, wherein said hindered primary alcohols contain the following group I in their structures:

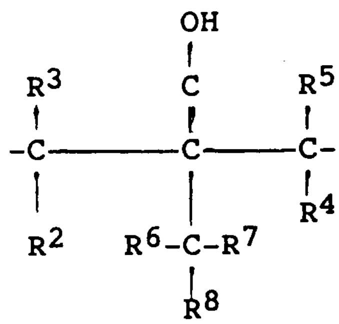

(I)

wherein in group I, $R^2$, $R^3$, $R^4$, $R^5$, $R^6$, $R^7$ and $R^8$ are individually selected from hydrogen, alkyl, alkenyl, alkinyl, cycloaliphatic and aryl groups of up to 12 carbon atoms; said unhindered primary alcohols contain up to 32 carbon atoms; said hindered secondary alcohols contain the following group II in their structures:

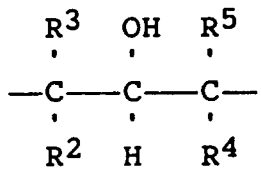

(II)

where in group II, above, $R^3$ and $R^5$ are individually selected from hydrogen, alkyl, alkenyl, alkinyl, cycloaliphatic and aryl groups each containing up to 12 carbon atoms, and $R^2$ and $R^4$ are individually selected from alkyl, alkenyl, alkinyl, cycloaliphatic, and aryl groups each containing up to 12 carbon atoms, and wherein said unhindered primary alcohols and said unhindered secondary alcohols are devoid of groups I and II.

**10.** Process of claim 9 wherein said cocatalyst is effective in extending pot life of said mixed reactant streams, wherein said tertiary alcohol is selected from acyclic tertiary alcohols containing 4 to 19 carbon atoms, wherein said hindered primary alcohols contain 4 to 32 carbon atoms.

**11.** Process of claim 10 wherein said mixed reactant streams have pot life exceeding about one half hour and molding temperature that is 10 to 80 °C lower than molding tempreatures necessary if only a tertiary alcohol alone, or a hindered secondary alcohol alone, or a hindered primary alcohol alone were used to form said cocatalyst; wherein said norbornene-type monomer is selected from substituted and unsubstituted 2-norbornenes, dicyclopentadienes, dihydrodicyclopentadienes, trimers and tetramers of cyclopentadienes, tetracyclododecenes, and mixtures thereof; and wherein said cocatalyst has the following formula:

$(RO)_aR^1_b\,AlX_c$

where RO is derived from said combination of said first alcohol and said second alcohol, where in said

halide-containing cocatalysts, "a" is 1/2 to 2-1/2, "b" is 1/4 to 2, "c" is 1/2 to 2; and where in the cocatalysts which are devoid of a halogen, "a" is 0.7 to 1.5, "b" is 1.5 to 2.3, and "c" is zero, with the sum of a, b and c being 3.0, $R^1$ is selected from alkyl radicals of 1 to 12 carbon atoms, and X is selected from chlorine, iodine, bromine and fluorine.

**12.** Process of claim 11 wherein said cocatalyst, $R^1$ contains 2 to 8 carbon atoms; where in the halide-containing cocatalysts, "a" is 0.75 to 1-1/2, "b" is 1/2 to 1-1/2, "c" is 3/4 to 1-1/4; where in the cocatalysts devoid of a halide, "a" is 0.75 to 1.25, "b" is 1.75 to 2.25, and "c" is zero; and X is chlorine.

**13.** Process of claim 12 including the step of initiating polymerization of said norbornene-type monomer at a mold temperature of 50 to 90 °C; wherein 0.2 to 100 millimoles of aluminum in said cocatalyst is used per mole of said monomer; and wherein 0.05 to 10 millimoles of said activator is used per mole of said monomer.

**14.** Process of claim 13 wherein said first alcohol is selected from t-butanol, t-amyl alcohol, 3-ethyl-3-pentanol, triphenyl methanol 2,4-dimethyl-3-pentanol, 3-methyl-3-pentanol, 2-methyl-2-hexanol, neopentylalcohol, 2,4-dimethyl-3-hexanol, 2-methyl-4-ethyl-3-hexanol, 2,2-dimethyl-1-butanol, 2,2-diethyl-1-butanol, 2-methyl-2-ethyl-1-propanol, 2-methyl-2-ethyl-1-butanol, 2,2-dipropyl-1-pentanol, 2,2-dipropyl-1-hexanol, 2-propyl-2-ethyl-1-hexanol; 2-ethyl-2-hexanol, 2-propyl-2-hexanol, 3-methyl-3-hexanol, 3-ethyl-3-hexanol, 3-propyl-3-hexanol, 1-phenyl-1-methyl-1-ethanol, 1-phenyl-1-ethyl-1-propanol and mixtures thereof; wherein said second alcohol is selected from ethanol, methanol, n-propyl alcohol, n-butanol, isobutyl alcohol, 1-heptanol, 1-pentanol, 1-hexanol, 1-octanol, isopropanol, sec-butanol, 2-pentanol, 3-hexanol, and mixtures thereof; wherein said norbornene-type monomer is selected from methyl norbornene, ethylidene norbornene, trimers and tetramers of cyclopentadiene, dicyclopentadiene, methyltetracyclododecene, and mixtures of such monomers; wherein said activator is selected from tetrachlorosilane, dimethylmonochlorosilane, dimethyldichlorosilane, diphenyldichlorosilane, and mixtures thereof; and wherein said cocatalyst is formed from components selected from monoalkylaluminum dichlorides, dialkylaluminum monochlorides, alkylaluminum sesquichlorides, trialkylaluminums, and mixtures thereof, wherein each alkyl group contains 2 to 8 carbon atoms.

**15.** The process of claim 14 wherein said first alcohol is 2,4-dimethyl-3-pentanol and said second alcohol is n-propyl alcohol.

## Patentansprüche

**1.** Cokatalysatorzusammensetzung, umfassend wenigstens ein Monomer des Norbornentyps und einen Metathese-Ringöffnungscokatalysator, der ausgewählt ist aus Alkoxyalkylaluminium, Aralkoxyalkylaluminium, Alkoxyalkylaluminiumhalogeniden, Aralkoxyalkylaluminiumhalogeniden und Gemischen davon, wobei die Alkoxy- und Aralkoxygruppen von der Kombination eines ersten Alkohols und eines zweiten Alkohols abgeleitet sind, wobei der erste Alkohol aus tertiären Alkoholen, gehinderten primären Alkoholen, gehinderten sekundären Alkoholen und Gemischen davon ausgewählt wird und der zweite Alkohol aus ungehinderten primären Alkoholen, ungehinderten sekundären Alkoholen und Gemischen davon ausgewählt wird, wobei das Stoffmengenverhältnis von dem ersten Alkohol zu dem zweiten Alkohol im Bereich von 1:10 bis 10:1 liegt, wobei die gehinderten primären Alkohole 5 bis 32 Kohlenstoffatome enthalten, wobei die gehinderten sekundären Alkohole 7 bis 32 Kohlenstoffatome enthalten, wobei die gehinderten primären Alkohole die folgende Gruppe I in ihren Strukturen enthalten:

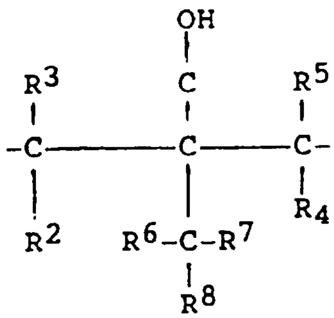

(I)

wobei $R^2$, $R^3$, $R^4$, $R^5$, $R^6$, $R^7$ und $R^8$ in Gruppe I einzeln aus Wasserstoff, Alkyl, Alkenyl, Alkinyl, cycloaliphatischen und Arylgruppen mit bis zu 12 Kohlenstoffatomen ausgewählt werden, die ungehinderten primären Alkohole bis zu 32 Kohlenstoffatome enthalten, die gehinderten sekundären Alkohole die folgende Gruppe II in ihren Strukturen enthalten:

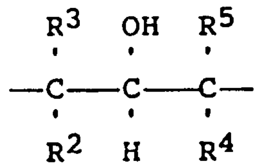

(II)

wobei in Gruppe II oben $R^3$ und $R^5$ einzeln aus Wasserstoff, Alkyl, Alkenyl, Alkinyl, cycloaliphatischen und Arylgruppen, die jeweils bis zu 12 Kohlenstoffatome enthalten, ausgewählt werden und $R^2$ und $R^4$ einzeln aus Alkyl, Alkenyl, Alkinyl, cycloaliphatischen und Arylgruppen, die jeweils bis zu 12 Kohlenstoffatome enthalten, ausgewählt werden, und wobei die ungehinderten primären Alkohole und ungehinderten sekundären Alkohole keine Gruppen I und II enthalten.

**2.** Zusammensetzung gemäß Anspruch 1, wobei die tertiären Alkohole aus acyclischen tertiären Alkoholen mit 4 bis 19 Kohlenstoffatomen ausgewählt werden.

**3.** Zusammensetzung gemäß Anspruch 2, wobei in den gehinderten primären Alkoholen die Gruppen $R^2$ bis $R^8$ einzeln aus Wasserstoff und Alkylgruppen mit 1 bis 6 Kohlenstoffatomen ausgewählt werden, wobei in den gehinderten sekundären Alkoholen die Gruppen $R^2$ und $R^4$ einzeln aus Alkylgruppen mit 1 bis 6 Kohlenstoffatomen ausgewählt werden und die Gruppen $R^3$ und $R^5$ einzeln aus Wasserstoff und Alkylgruppen mit 1 bis 6 Kohlenstoffatomen ausgewählt werden und wobei das Stoffmengenverhältnis des ersten Alkohols zu dem zweiten 1:5 bis 5:1 beträgt.

**4.** Zusammensetzung gemäß Anspruch 3, wobei das Monomer des Norbornentyps ausgewählt wird aus substituierten und unsubstituierten 2-Norbornenen, Dicyclopentadienen, Dihydrodicyclopentadienen, Trimeren und Tetrameren von Cyclopentadienen, Tetracyclododecenen und Gemischen davon und wobei der Cokatalysator die folgende Formel hat:

$(RO)_aR^1{}_bAlX_C$

wobei RO von der Kombination des ersten Alkohols und des zweiten Alkohols abgeleitet ist, wobei in den halogenidhaltigen Cokatalysatoren "a" 1/2 bis 2 1/2 beträgt, "b" 1/4 bis 2 beträgt, "c" 1/2 bis 2 beträgt und in den Cokatalysatoren, die kein Halogen enthalten, "a" 0,7 bis 1,5 beträgt, "b" 1,5 bis 2,3 beträgt und "c" null ist, wobei die Summe von a, b und c 3,0 beträgt, $R^1$ aus Alkylresten mit 1 bis 12 Kohlenstoffatomen ausgewählt wird und X aus Chlor, Iod, Brom und Fluor ausgewählt wird.

**5.** Zusammensetzung gemäß Anspruch 1 bis 4, die weiterhin einen Aktivator enthält, der aus Halogensilanen ausgewählt wird, die wie folgt definiert sind:

$R_mSiX_n$

wobei m 0 bis 3 beträgt, n 1 bis 4 beträgt, R einzeln aus Alkyl- und Alkoxygruppen mit 1 bis 6 Kohlenstoffatomen ausgewählt wird und X aus Chlor, Brom, Fluor und Iod ausgewählt wird.

**6.** Zusammensetzung gemäß Anspruch 5 mit einer Topfzeit von über zwei Stunden und einer Formtemperatur von 50 bis 100 °C, wobei $R^1$ in dem Cokatalysator 2 bis 8 Kohlenstoffatome enthält, wobei in den halogenidhaltigen Cokatalysatoren "a" 0,75 bis 1 1/2 beträgt, "b" 1/2 bis 1 1/2 beträgt, "c" 3/4 bis 1 1/4 beträgt, wobei in den Cokatalysatoren, die kein Halogenid enthalten, "a" 0,75 bis 1,25 beträgt, "b" 1,75 bis 2,25 beträgt und "c" null ist und X Chlor ist, wobei in dem Cocatalysator 0,2 bis 100 Millimol Aluminium pro Mol des Monomers verwendet werden und wobei 0,05 bis 10 Millimol des Aktivators pro Mol des Monomers verwendet werden.

**7.** Zusammensetzung gemäß Anspruch 6, wobei der erste Alkohol ausgewählt wird aus t-Butanol, t-Amylalkohol, 3-Ethyl-3-pentanol, Triphenylmethanol, 2,4-Dimethyl-3-pentanol, 3-Methyl-3-pentanol, 2-Methyl-2-hexanol, Neopentylalkohol, 2,4-Diethyl-3-hexanol, 2,4-Dimethyl-3-hexanol, 2-Methyl-4-ethyl-3-hexanol, 2,2-Dimethyl-1-butanol, 2,2-Diethyl-1-butanol, 2-Methyl-2-ethyl-1-propanol, 2-Methyl-2-ethyl-1-butanol, 2,2-Dipropyl-1-pentanol, 2,2-Dipropyl-1-hexanol, 2-Propyl-2-ethyl-1-hexanol, 2-Ethyl-2-hexanol, 2-Propyl-2-hexanol, 3-Methyl-3-hexanol, 3-Ethyl-3-hexanol, 3-Propyl-3-hexanol, 1-Phenyl-1-methyl-1-ethanol und 1-Phenyl-1-ethyl-1-propanol und Gemischen davon, wobei der zweite Alkohol ausgewählt wird aus Ethanol, Methanol, n-Propylalkohol, n-Butanol, Isobutylalkohol, 1-Heptanol, 1-Pentanol, 1-Hexanol, 1-Octanol, Isopropanol, sec-Butanol, 2-Pentanol, 3-Hexanol und Gemischen davon, wobei das Monomer des Norbornentyps ausgewählt wird aus Methylnorbornen, Ethylidennorbornen, Trimeren und Tetrameren von Cyclopentadien, Dicyclopentadien, Methyltetracyclododecen und Gemischen aus solchen Monomeren, wobei der Aktivator aus Tetrachlorsilan, Dimethylmonochlorsilan, Dimethyldichlorsilan, Diphenyldichlorsilan und Gemischen davon ausgewählt wird und wobei der Cokatalysator aus Komponenten gebildet wird, die aus Monoalkylaluminiumdichloriden, Dialkylaluminiummonochloriden, Alkylaluminiumsesquichloriden, Trialkylaluminiums und Gemischen davon ausgewählt werden, wobei jede Alkylgruppe 2 bis 8 Kohlenstoffatome enthält.

**8.** Zusammensetzung gemäß Anspruch 7, wobei der erste Alkohol 2,4-Dimethyl-3-pentanol ist und der zweite Alkohol n-Propylalkohol ist.

**9.** Verfahren zum Polymerisieren einer Monomercharge, die wenigstens ein Monomer des Norbornentyps enthält, zu Polymer, umfassend das Kombinieren mehrerer Reaktantenströme, wobei ein Reaktantenstrom wenigstens ein Monomer des Norbornentyps, einen Aktivator, der aus Halogenmetallverbindungen ausgewählt ist, die zusammen mit der Verwendung von Cokatalysatoren, die kein Halogenid enthalten, erforderlich sind, die aber mit halogenidhaltigen Cokatalysatoren wahlweise verwendet werden können, sowie einen Metathese-Ringöffnungscokatalysator, der aus Alkoxyalkylaluminiumhalogeniden, Aralkoxyalkylaluminiumhalogeniden, Alkoxyalkylaluminiums, Aralkoxyalkylaluminiums und Gemischen davon ausgewählt ist, enthält, wobei die Alkoxy- und Aralkoxygruppen von der Kombination eines ersten Alkohols und eines zweiten Alkohols abgeleitet sind, wobei der erste Alkohol aus tertiären Alkoholen, gehinderten primären Alkoholen, gehinderten sekundären Alkoholen und Gemischen davon ausgewählt wird und wobei der zweite Alkohol aus ungehinderten primären Alkoholen, ungehinderten sekundären Alkoholen und Gemischen davon ausgewählt wird, wobei das Stoffmengenverhältnis von dem ersten Alkohol zu dem zweiten Alkohol im Bereich von etwa 1:10 bis 10:1 liegt, und wobei wenigstens ein anderer Reaktantenstrom wenigstens ein Monomer vom Norbornentyp und einen Metathese-Ringöffnungskatalysator enthält, das Mischen und Einspritzen der Reaktantenströme in eine Form, in der eine Polymerisation durch Ringöffnung des Monomers stattfindet, und das Entnehmen eines geformten Produkts aus der Form, wobei die gehinderten sekundären Alkohole 3 bis 18 Kohlenstoffatome enthalten, wobei die gehinderten primären Alkohole die folgende Gruppe I in ihren Strukturen enthalten:

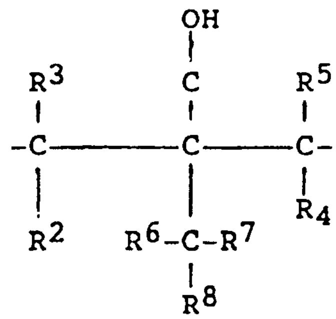

(I)

wobei $R^2$, $R^3$, $R^4$, $R^5$, $R^6$, $R^7$ und $R^8$ in Gruppe I einzeln aus Wasserstoff, Alkyl, Alkenyl, Alkinyl, cycloaliphatischen und Arylgruppen mit bis zu 12 Kohlenstoffatomen ausgewählt werden, die ungehinderten primären Alkohole bis zu 32 Kohlenstoffatome enthalten, die gehinderten sekundären Alkohole die folgende Gruppe II in ihren Strukturen enthalten:

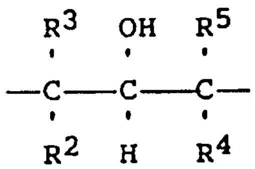

(II)

wobei in Gruppe II oben $R^3$ und $R^5$ einzeln aus Wasserstoff, Alkyl, Alkenyl, Alkinyl, cycloaliphatischen und Arylgruppen, die jeweils bis zu 12 Kohlenstoffatome enthalten, ausgewählt werden und $R^2$ und $R^4$ einzeln aus Alkyl, Alkenyl, Alkinyl, cycloaliphatischen und Arylgruppen, die jeweils bis zu 12 Kohlenstoffatome enthalten, ausgewählt werden, und wobei die ungehinderten primären Alkohole und ungehinderten sekundären Alkohole keine Gruppen I und II enthalten.

**10.** Verfahren gemäß Anspruch 9, wobei der Cokatalysator eine Verlängerung der Topfzeit der gemischten Reaktantenströme bewirkt, wobei der tertiäre Alkohol aus acyclischen tertiären Alkoholen mit 4 bis 19 Kohlenstoffatomen ausgewählt wird, wobei die gehinderten primären Alkohole 4 bis 32 Kohlenstoffatome enthalten.

**11.** Verfahren gemäß Anspruch 10, wobei die gemischten Reaktantenströme eine Topfzeit von über etwa einer halben Stunde und eine Formtemperatur, die 10 bis 80 °C niedriger ist als Formtemperaturen, die notwendig sind, wenn nur ein tertiärer Alkohol allein oder ein gehinderter sekundärer Alkohol allein oder ein gehinderter primärer Alkohol allein verwendet würden, um den Cokatalysator zu bilden, haben, wobei das Monomer des Norbornentyps ausgewählt wird aus substituierten und unsubstituierten 2-Norbornenen, Dicyclopentadienen, Dihydrodicyclopentadienen, Trimeren und Tetrameren von Cyclopentadienen, Tetracyclododecenen und Gemischen davon und wobei der Cokatalysator die folgende Formel hat:

$(RO)_aR^1{}_bAlX_c$

wobei RO von der Kombination des ersten Alkohols und des zweiten Alkohols abgeleitet ist, wobei in den halogenidhaltigen Cokatalysatoren "a" 1/2 bis 2 1/2 beträgt, "b" 1/4 bis 2 beträgt, "c" 1/2 bis 2 beträgt und wobei in den Cokatalysatoren, die kein Halogen enthalten, "a" 0,7 bis 1,5 beträgt, "b" 1,5 bis 2,3 beträgt und "c" null ist, wobei die Summe von a, b und c 3,0 beträgt, $R^1$ aus Alkylresten mit 1 bis 12 Kohlenstoffatomen ausgewählt wird und X aus Chlor, Iod, Brom und Fluor ausgewählt wird.

**12.** Verfahren gemäß Anspruch 11, wobei $R^1$ in dem Cokatalysator 2 bis 8 Kohlenstoffatome enthält, wobei in den halogenidhaltigen Cokatalysatoren "a" 0,75 bis 1 1/2 beträgt, "b" 1/2 bis 1 1/2 beträgt, "c" 3/4 bis 1 1/4 beträgt, wobei in den Cokatalysatoren, die kein Halogenid enthalten, "a" 0,75 bis 1,25 beträgt, "b" 1,75 bis 2,25 beträgt und "c" null ist und X Chlor ist.

13. Verfahren gemäß Anspruch 12, das den Schritt des Startens der Polymerisation des Monomers des Norbornentyps bei einer Formtemperatur von 50 bis 90 °C beinhaltet, wobei in dem Cokatalysator 0,2 bis 100 Millimol Aluminium pro Mol des Monomers verwendet werden und wobei 0,05 bis 10 Millimol des Aktivators pro Mol des Monomers verwendet werden.

14. Verfahren gemäß Anspruch 13, wobei der erste Alkohol ausgewählt wird aus t-Butanol, t-Amylalkohol, 3-Ethyl-3-pentanol, Triphenylmethanol, 2,4-Dimethyl-3-pentanol, 3-Methyl-3-pentanol, 2-Methyl-2-hexanol, Neopentylalkohol, 2,4-Dimethyl-3-hexanol, 2-Methyl-4-ethyl-3-hexanol, 2,2-Dimethyl-1-butanol, 2,2-Diethyl-1-butanol, 2-Methyl-2-ethyl-1-propanol, 2-Methyl-2-ethyl-1-butanol, 2,2-Dipropyl-1-pentanol, 2,2-Dipropyl-1-hexanol, 2-Propyl-2-ethyl-1-hexanol, 2-Ethyl-2-hexanol, 2-Propyl-2-hexanol, 3-Methyl-3-hexanol, 3-Ethyl-3-hexanol, 3-Propyl-3-hexanol, 1-Phenyl-1-methyl-1-ethanol, 1-Phenyl-1-ethyl-1-propanol und Gemischen davon, wobei der zweite Alkohol ausgewählt wird aus Ethanol, Methanol, n-Propylalkohol, n-Butanol, Isobutylalkohol, 1-Heptanol, 1-Pentanol, 1-Hexanol, 1-Octanol, Isopropanol, sec-Butanol, 2-Pentanol, 3-Hexanol und Gemischen davon, wobei das Monomer des Norbornentyps ausgewählt wird aus Methylnorbornen, Ethylidennorbornen, Trimeren und Tetrameren von Cyclopentadien, Dicyclopentadien, Methyltetracyclododecen und Gemischen aus solchen Monomeren, wobei der Aktivator aus Tetrachlorsilan, Dimethylmonochlorsilan, Dimethyldichlorsilan, Diphenyldichlorsilan und Gemischen davon ausgewählt wird und wobei der Cokatalysator aus Komponenten gebildet wird, die aus Monoalkylaluminiumdichloriden, Dialkylaluminiummonochloriden,Alkylaluminiumsesquichloriden, Trialkylaluminiums und Gemischen davon ausgewählt werden, wobei jede Alkylgruppe 2 bis 8 Kohlenstoffatome enthält.

15. Verfahren gemäß Anspruch 14, wobei der erste Alkohol 2,4-Dimethyl-3-pentanol ist und der zweite Alkohol n-Propylalkohol ist.

## Revendications

1. Composition de cocatalyseur comprenant au moins un monomère du type norbornène et un cocatalyseur d'ouverture de cycle de métathèse, choisi parmi les alcoxyalkylaluminiums, les aralcoxyalkylaluminiums, les halogénures d'alcoxyalkylaluminium et les halogénures d'aralcoxyalkylaluminium et leurs mélanges, dans laquelle lesdits groupes alcoxy et lesdits groupes aralcoxy sont dérivés d'une combinaison d'un premier alcool et d'un deuxième alcool, dans laquelle ledit premier alcool est choisi parmi les alcools tertiaires, les alcools primaires à empêchement stérique, les alcools secondaires à empêchement stérique et les mélanges de ceux-ci et ledit deuxième alcool est choisi parmi les alcools primaires sans empêchement, les alcools secondaires sans empêchement et les mélanges de ceux-ci, dans laquelle le rapport molaire dudit premier alcool audit deuxième alcool est compris dans l'intervalle de 1:10 à 10:1, dans laquelle lesdits alcools primaires à empêchement stérique contiennent de 5 à 32 atomes de carbone, dans laquelle lesdits alcools secondaires à empêchement stérique contiennent de 7 à 32 atomes de carbone, dans laquelle lesdits alcools primaires à empêchement stérique contiennent le groupe I ci-après dans leur structure:

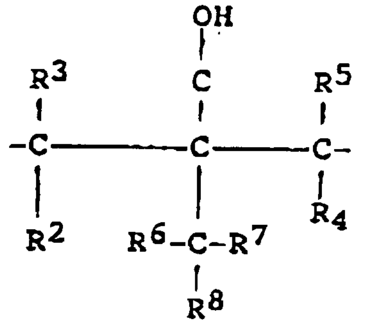

(I)

dans laquelle, dans le groupe I, R2, R3, $R^4$, $R^5$, $R^6$, $R^7$ et $R^8$ sont choisis séparément parmi les atomes d'hydrogène, les groupes alkyle, alcényle, alcinyle, cycloaliphatique et aryle ayant jusqu'à 12 atomes de carbone; lesdits alcools primaires sans empêchement contenant jusqu'à 32 atomes de carbone, lesdits alcools secondaires avec empêchement stérique contenant dans leur structure le groupe II ci-après:

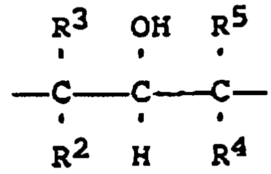

(II)

dans laquelle, dans le groupe II ci-dessus, R3 et $R^5$ qui sont choisis séparément parmi les atomes d'hydrogène et les groupes alkyle, alcényle, alcinyle, cycloaliphatique et aryle, contiennent chacun jusqu'à 12 atomes de carbone et R2 et $R^4$ sont choisis séparément parmi les groupes alkyle, alcényle, alcinyle, cycloaliphatique et aryle contenant chacun jusqu'à 12 atomes de carbone et dans laquelle lesdits alcools primaires sans empêchement et lesdits alcools secondaires sans empêchement sont dépourvus des groupes I et II.

**2.** Composition selon la revendication 1, dans laquelle lesdits alcools tertiaires sont choisis parmi les alcools tertiaires acycliques contenant de 4 à 19 atomes de carbone.

**3.** Composition selon la revendication 2, dans laquelle, dans lesdits alcools primaires à empêchement stérique, les groupes R2 à $R^8$ sont choisis séparément parmi les atomes d'hydrogène et les groupes alkyle ayant de 1 à 6 atomes de carbone; dans laquelle, dans lesdits alcools secondaires à empêchement stérique, les groupes R2 et $R^4$ sont choisis séparément parmi les groupes alkyle ayant de 1 à 6 atomes de carbone et les groupes R3 et $R^5$ sont choisis séparément parmi les atomes d'hydrogène et les groupes alkyle ayant de 1 à 6 atomes de carbone; et dans laquelle ledit rapport molaire dudit premier alcool audit deuxième alcool est compris entre 1:5 et 5:1.

**4.** Composition selon la revendication 3, dans laquelle ledit monomère du type norbornène est choisi parmi les 2-norbornènes, les dicyclopentadiènes, les didhydrodicyclopentadiènes, les trimères et tétramères des cyclopentadiènes, les tétracyclododécènes, substitués et non substitués, et las mélanges de ceux-ci, et dans laquelle le cocatalyseur présente la formule suivante:

$(RO)_aR^1_bAlX_c$

dans laquelle RO est dérivé de ladite combinaison dudit premier alcool et dudit deuxième alcool, dans laquelle, dans lesdits cocatalyseurs contenant un halogénure, "a" est compris entre 1/2 et 2 1/2, "b" est compris entre 1/4 et 2, "c" est compris entre 1/2 et 2 et, dans les cocatalyseurs dépourvus d'un halogène, "a" est compris entre 0,7 et 1,5, "b" est compris entre 1,5 et 2,3, "c" est égal à zéro, la somme de a, b et c étant égale à 3,0, $R^1$ étant choisi parmi les radicaux alkyle ayant de 1 à 12 atomes de carbone et X étant choisi parmi le chlore, l'iode, le brome et le fluor.

**5.** Composition selon les revendications 1 à 4 comprenant en outre un activateur choisi parmi les halosilanes définies par la formule suivante:

$R_mSiX_n$

dans laquelle m a une valeur de 0 à 3, n de 1 à 4, R est choisi séparément parmi les groupes alkyle et alcoxy contenant de 1 à 6 atomes de carbone, et X est choisi parmi le chlore, le brome, le fluor et l'iode.

**6.** Composition selon la revendication 5, ayant une durée d'utilisation dépassant deux heures et une température de moulage de 50 à 100 °C; dans laquelle, dans ledit cocatalyseur, $R^1$ contient de 2 à 8 atomes de carbone; dans laquelle, dans les cocatalyseurs contenant un halogénure, "a" est compris entra 0,75 et 1 1/2, "b" est compris entre 1/2 et 1 1/2, "c" est compris entre 3/4 et 1 1/4; dans laquelle, dans lesdits cocatalyseurs dépourvus d'halogénure, "a" est compris entre 0,75 et 1,25, "b" est compris entre 1,75 et 2,25 et "c" est égal à zéro; et X représente du chlore; dans laquelle on utilise de 0,2 à 100 millimoles d'aluminium dans ledit cocatalyseur pour une mole dudit monomère et dans laquelle on utilise de 0,05 à 10 millimoles dudit activateur par mole dudit monomère.

**7.** Composition selon la revendication 6, dans laquelle ledit premier alcool est choisi parmi le t-butanol, l'alcool t-amylique, le 3-éthyl-3-pentanol, le triphénylméthanol, le 2,4-diméthyl-3-pentanol, le 3-méthyl-3-pentanol, le 2-méthyl-2-hexanol, l'alcool néopentylique, le 2,4-diéthyl-3-hexanol, le 2,4-diméthyl-3-hexanol, le 2-méthyl-4-éthyl-3-hexanol, le 2,2-diméthyl-1-butanol, le 2,2-diéthyl-1-butanol, le 2-méthyl-2-éthyl-1-propanol, le 2-méthyl-2-éthyl-1-butanol, le 2,2-dipropyl-1-pentanol, le 2,2-dipropyl-1-hexanol, le 2-propyl-2-éthyl-1-hexanol; le 2-éthyl-2-hexanol, le 2-propyl-2-hexanol, le 3-méthyl-3-hexanol, le 3-éthyl-3-hexanol, le 3-propyl-3-hexanol, le 1-phényl-1-méthyl-1-éthanol, le 1-phényl-1-éthyl-1-propanol, et leurs mélanges; dans laquelle ledit deuxième alcool est choisi Parmi l'éthanol, le méthanol, l'alcool n-propylique, le n-butanol, l'alcool isobutylique, le 1-heptanol, le 1-pentanol, le 1-hexanol, le 1-octanol, l'isopropanol, le sec-butanol, le 2-pentanol, le 3-hexanol, et leurs mélanges; dans laquelle ledit monomère du type norbornène est, choisi parmi le méthyl-norbornène, l'éthylidène-norbornène, les trimères et les tétramères du cyclopentadiène, le dicyclopentadiène, le méthyltétracyclododécène et les mélanges de ces monomères; dans laquelle ledit activateur est choisi parmi le tétrachlorosilane, le diméthylmonochlorosilane, le diméthyldichlorosilane, le diphényldichlorosilane et les mélanges de ceux-ci; et dans laquelle ledit cocatalyseur est formé de constituants choisis parmi les dichlorures de monoalkylaluminium, les monochlorures de dialkylaluminium, les sesquichlorures d'alkylaluminium, les trialkylaluminiums et les mélanges de, ceux-ci, dans laquelle chacun des groupes alkyle contient de 2 à 8 atomes de carbone.

**8.** Composition selon la revendication 7, dans laquelle ledit premier alcool est le 2,4-diméthyl-3-pentanol et ledit deuxième alcool est l'alcool n-propylique.

**9.** Procédé de polymérisation d'une charge de monomère contenant au moins un monomère du type norbornène pour obtenir un polymère, ledit procédé consistant à combiner plusieurs courants de réactif, un courant de réactif contenant au moins un monomère du type norbornène, un activateur choisi parmi les composés halogénés des métaux qui sont nécessaires en cas d'emploi de cocatalyseurs dépourvus d'un halogénure, mais qui sont facultatifs en cas d'emploi de cocatalyseurs contenant un halogénure, et un cocatalyseur d'ouverture de cycle de métathèse, choisi parmi les halogénures d'alcoxyalkylaluminium, les halogénures d'aralcoxyalkylaluminium, les alcoxyalkylaluminiums, les aralcoxyalkylaluminums et les mélanges de ceux-ci, dans lequel lesdits groupes alcoxy et lesdits groupes aralcoxy sont dérivés d'une combinaison d'un premier alcool et d'un deuxième alcool, dans lequel ledit prémier alcool est choisi parmi les alcools tertiaires, les alcools primaires à empêchement stérique,les alcools secondaires à empêchement stérique et les mélanges de ceux-ci et dans lequel ledit deuxième alcool est choisi parmi les alcools primaires sans empêchement, les alcools secondaires sans empêchement et les mélanges de ceux-ci, le rapport molaire dudit premier alcool audit deuxième alcool étant compris dans l'intervalle de 1:10 à 10:1; et au moins l'un des autres courants de réactif contenant au moins un monomère du type norbornène et un catalyseur d'ouverture de cycle de métathèse; à mélanger et à injecter lesdits courants de réactifs dans un moule où se produit la polymérisation par ouverture de cycle dudit monomère et à extraire un objet moulé du moule, dans lequel lesdits alcools secondaires à empêchement stérique contiennent de 3 à 18 atomes de carbone, dans lequel lesdits alcools primaires à empêchement stérique contiennent dans leur structure le groupe I ci-après :

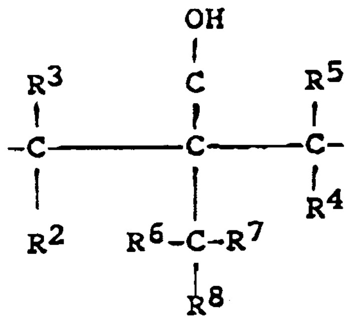

(I)

où, dans le groupe I ci-dessus, R2, R3, $R^4$, $R^5$, $R^6$, $R^7$ et $R^8$ sont choisis séparément parmi les atomes d'hydrogène, les groupes alkyle, alcényle, alcinyle, cycloaliphatique et aryle ayant jusqu'à 12 atomes de carbone; lesdits alcools primaires sans empêchement contenant jusqu'à 32 atomes de carbone,

lesdits alcools secondaires à empêchement stérique contenant dans leur structure le groupe II ci-après:

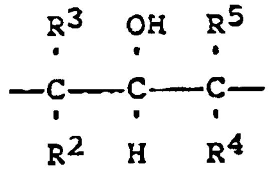

(II)

où, dans le groupe II ci-dessus, R3 et $R^5$ sont choisis séparément parmi les atomes d'hydrogène, les groupes alkyle, alcényle, alcinyle, cycloaliphatique et aryle, contenant chacun jusqu'à 12 atomes de carbone et R2 et $R^4$ sont choisis séparément parmi les groupes alkyle, alcényle, alcinyle, cycloaliphatique et aryle contenant chacun jusqu'à 12 atomes de carbone et dans lequel lesdits alcools primaires sans empêchement et lesdits alcools secondaires sans empêchement sont dépourvus des groupes I et II.

**10.** Procédé selon la revendication 9 dans lequel ledit cocatalyseur est efficace pour prolonger la durée d'utilisation desdits courants de réactif mélangés, dans lequel ledit alcool tertiaire est choisi parmi les alcools tertiaires acycliques contenant de 4 à 19 atomes de carbone, dans lequel lesdits alcools primaires à empêchement stérique contiennent de 4 à 32 atomes de carbone.

**11.** Procédé selon la revendication 10, dans lequel lesdits courants de réactifs mélangés ont une durée d'utilisation dépassant environ une demi-heure et une température de moulage qui est de 10 à 80 °C plus basse que les températures de moulage nécessaires si l'on utilisait seulement un alcool tertiaire seul ou un alcool secondaire à empêchement stérique seul ou un alcool primaire à empêchement stérique seul pour former ledit cocatalyseur, dans lequel ledit monomère du type norbornène est choisi parmi les 2-norbornènes, les dicyclopentadiènes, les dihydrodicyclopentadiènes, les trimères et les tétramères des cyclopentadiènes, les tétracyclododécènes, substitués et non-substitués, et les mélanges de ceux-ci et dans lequel le cocatalyseur présente la formule suivante:

$(RO)_aR^1{}_bAlX_c$

où RO est dérivé de ladite combinaison dudit premier alcool et dudit deuxième alcool, dans lequel, dans lesdits cocatalyseurs contenant un halogénure, "a" est compris entre 1/2, et 2 1/2, "b" est compris entre 1/4 et 2, "c" est compris entre 1/2 et 2 et dans lequel, dans les cocatalyseurs dépourvus d'un halogène, "a" est compris entre 0,7 et 1,5, "b" est compris entre 1,5 et 2,3, "c" est égal à zéro, la somme de a, b et c étant égale à 3,0, $R^1$ est choisi parmi les radicaux alkyle ayant de 1 à 12 atomes de carbone et X est choisi parmi le chlore, l'iode, le brome et le fluor.

**12.** Procédé selon la revendication 11 dans lequel ledit cocatalyseur $R^1$ contient de 2 à 8 atomes de carbone; dans lequel, dans lesdits cocatalyseurs contenant un halogénure, "a" est compris entre 0,75 et 1 1/2, "b" est compris entre 1/2 et 1 1/2, "c" est compris entre 3/4 et 1 1/4; dans lequel, dans les cocatalyseurs dépourvus d'halogénure, "a" est compris entre 0,75 et 1,25, "b" est compris entre 1,75 et 2,25, et "c" est égal à zéro; et X représente du chlore.

**13.** Procédé selon la revendication 12 comprenant l'étape d'initier la polymérisation dudit monomère du type norbornène à une température de moule de 50 à 90 °C; dans lequel on utilise de 0,2 à 100 millimoles d'aluminium dans ledit cocatalyseur par mole dudit monomère; et dans lequel on utilise de 0,05 à 10 millimoles dudit activateur par mole dudit monomère.

**14.** Procédé selon la revendication 13, dans lequel le premier alcool est choisi parmi le t-butanol, l'alcool t-amylique, le 3-éthyl-3-pentanol, le triphényl-méthanol, le 2,4-diméthyl-3-pentanol, le 3-méthyl-3-pentanol, le 2-méthyl-2-hexanol, l'alcool néopentylique, le 2,4-diméthyl-3-hexanol, le 2-méthyl-4-éthyl-3-hexanol, le 2,2-diméthyl-1-butanol, le 2,2-diéthyl-1-butanol, le 2-méthyl-2-éthyl-1-propanol, le 2-méthyl-2-éthyl-1-butanol, le 2,2-dipropyl-1-pentanol, le 2,2-dipropyl-1-hexanol, le 2-propyl-2-éthyl-1-hexanol; le 2-éthyl-2-hexanol, le 2-propyl-2-hexanol, le 3-méthyl-3-hexanol, le 3-éthyl-3-hexanol, le 3-propyl-3-hexanol, le 1-phényl-1-méthyl-1-éthanol, le 1-phényl-1-éthyl-1-propanol, et leurs mélanges; dans lequel ledit deuxième alcool est choisi parmi l'éthanol, le méthanol, l'alcool n-propylique, le n-butanol, l'alcool isobutylique, le 1-heptanol, le 1-pentanol, le 1-hexanol, le 1-octanol, l'isopropanol, le sec-butanol, le 2-pentanol, le 3-hexanol, et leurs mélanges; dans lequel ledit monomère du type norbornène est choisi parmi le méthyl-norbornène, l'éthylidène-norbornène, les trimères et les tétramères du cyclopentadiène, le dicyclopentadiène, le méthyltétracyclododécène et les mélanges de ces monomères; dans lequel ledit activateur est choisi parmi le tétrachlorosilane, le diméthylmonochlorosilane, le diméthyldichlorosilane, le diphényldichlorosilane et les mélanges de ceux-ci; et dans lequel ledit cocatalyseur est formé de constituants choisis parmi les dichlorures de monoalkylaluminium, les monochlorures de dialkylaluminium, les sesquichlorures d'alkylaluminium, les trialkylaluminiums et les mélanges de ceux-ci, dans lequel chaque groupe alkyle contient de 2 à 8 atomes de carbone.

**15.** Procédé selon la revendication 14, dans lequel ledit premier alcool est le 2,4-diméthyl-3-pentanol et ledit deuxième alcool est l'alcool n-propylique.